(19) Europäisches Patentamt
European Patent Office
Office européen des brevets

(11) EP 4 382 572 A1

(12) EUROPÄISCHE PATENTANMELDUNG

(43) Veröffentlichungstag:
**12.06.2024 Patentblatt 2024/24**

(21) Anmeldenummer: **22212236.8**

(22) Anmeldetag: **08.12.2022**

(51) Internationale Patentklassifikation (IPC):
***C08L 83/06*** *(2006.01)* ***C08L 83/10*** *(2006.01)*
***C08L 83/14*** *(2006.01)*

(52) Gemeinsame Patentklassifikation (CPC):
**C08L 83/14; C08L 83/06; C08L 83/10;** C08G 77/14; C08G 77/18; C08G 77/442

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder:
- **Eder, Florian**
  **91054 Erlangen (DE)**
- **Pihale, Sven**
  **91792 Stopfenheim (DE)**

(74) Vertreter: **Siemens Patent Attorneys**
**Postfach 22 16 34**
**80506 München (DE)**

# (54) FORMULIERUNG FÜR HARZ UND/ODER KLEBER, FORMKÖRPER DARAUS UND VERWENDUNG

(57) Die Erfindung betrifft eine Formulierung für ein Harz und/oder einen Kleber, insbesondere ein wärmeleitfähiges Harz und/oder Kleber, einen Formkörper daraus und eine Verwendung in einem elektrischen oder elektronischen Bauelement zur Wärmeableitung. Hier wird erstmals eine Formulierung bereitgestellt, mit der sich hohe Füllgrade bei langer Topfzeit und guter Wärmeleitfähigkeit vereint, so dass für Vergießen, Extrusion, Spritzguss eine Formulierung mit höchsten Füllgraden und gleichzeitig guter Verarbeitbarkeit erhältlich ist.

EP 4 382 572 A1

## Beschreibung

Die Erfindung betrifft eine Formulierung für ein Harz und/oder einen Kleber, insbesondere ein wärmeleitfähiges Harz und/oder Kleber, einen Formkörper daraus und eine Verwendung in einem elektrischen oder elektronischen Bauelement zur Wärmeableitung.

In der Leistungselektronik und in der Elektronik allgemein geht es um die Steigerung der Leistungsdichten. Damit einher geht immer auch eine gesteigerte Wärmeerzeugung in den Komponenten, respektive um die Wärmeableitung aus den Komponenten.

Es wird daher versucht, die Kühlkapazität der Elemente der Komponenten zu steigern. So wird mit wärmeleitfähigen Klebern und Vergussharzen Abwärme von den elektrischen Bauelementen im Betrieb abgeleitet. Die Kleber dienen an den Platinen und ihrer Verbauung im Gerät zu Verbindung einzelner Bauteile und Vergussharze werden zur Verkapselung und Versiegelung der empfindlichen Elektronik gegenüber der Umgebung eingesetzt.

Aus der EP 4059712 ist dazu eine hybride Materialzusammensetzung zum Verdrucken mittels 3D Druck bekannt. Diese Materialzusammensetzung dient als Ausgangsmaterial in additiven Fertigungsverfahren zur strahlungsinduzierten Herstellung eines Formkörpers, wie eines an das elektronische Leistungselement angebrachten Kühlkörpers.

Die aus der o.g. EP 4059712 bekannte komplexe Materialzusammensetzung umfasst dabei alkoxidische Komponenten, Siloxane und zur Initiierung der UV-Härtung ein organisch basiertes Fotopolymer, sowie einen Reaktivverdünner.

Nachteilig an den bisher bekannten, zur Verwendung in additiven Fertigungsverfahren geeigneten Materialien ist, dass diese Materialien nach erfolgter Aushärtung beispielsweise auf dem Weg der so genannten "Verkieselung" oft spröde sind, leicht abblättern und/oder leicht brechen. Dies insbesondere dann, wenn diese Materialien, Füllstoffhaltig sind, beispielsweise durch Füllung mit wärmeleitfähigen Partikeln wärmeleitfähig gemacht sind. Grund hierfür ist, dass die Partikel in der Regel keinem Verfestigungsschrumpf unterliegen, sondern bereits in ihrer finalen Form vorliegen. Aus diesem Grund sollte die gesamte schrumpfbedingte Spannung durch das umgebende Netzwerk abgepuffert werden, was das Material, insbesondere im Falle von hohen Füllgraden, vor enorme Herausforderungen stellt.

Es wurde festgestellt, dass die UV-Initiierung bei der Materialzusammensetzung gemäß der oben genannten EP 4059712 vor allem eine schnelle Vorvernetzung der organischen Komponenten in der Materialzusammensetzung bewirkt, die eine freie Vernetzung der restlichen Komponenten behindert und damit Spannungen im resultierenden Formkörper erzeugt.

Nachteilig wirkt sich bei der bekannten Materialzusammensetzung auch eine Füllung mit metallischem Partikel aus, wenn diese ursprünglich flüssige Materialzusammensetzung durch UV-Vernetzung zu einem festen Formkörper aushärtet. Dies insbesondere deshalb, weil der Einsatz von Metallen als Füllstoffmaterial verhindert, dass eine homogene Belichtung des Materials eine gleich gute Vernetzung innerhalb der Materialzusammensetzung ermöglicht. Auch hier sind wieder Spannungen im resultierenden festen Formkörper die Folge.

Aufgabe der vorliegenden Erfindung ist es daher, ein zur Wärmeabfuhr in der Elektronik, insbesondere in der Leistungselektronik, einsetzbares Harz und/oder Kleber mit gegenüber dem Stand der Technik verbesserter mechanischen Festigkeit zur Verfügung zu stellen, das unter anderem beispielsweise auch Metalle als Füllstoffmaterial zulässt.

Diese Aufgabe wird durch den Gegenstand der vorliegenden Erfindung, wie er in der Beschreibung und den Ansprüchen offenbart ist, gelöst.

Dementsprechend ist Gegenstand der vorliegenden Erfindung Formulierung für ein Harz und/oder einen Kleber, zumindest ein erstes Material aus zumindest einer organofunktionellen Silan-Komponente mit einer Keramik-bildenden alkoxidischen Komponente und zumindest ein zweites, flüssig vorliegendes, Material, thermisch zu einem Formkörper härtbares Harz sowie Reaktivverdünner umfassend.

Reaktivverdünner sind zwar zur Einstellung der Rheologie bei thermisch härtenden Lacken bekannt, jedoch konnte hier überraschend festgestellt werden, dass Reaktivverdünner auch bei Einsatz von organofunktionellen Silan-Verbindungen, also den hier in Rede stehenden Silanbasierten Materialien die Viskosität der unvernetzten Materialzusammensetzung herabsetzen, aber während und nach erfolgter Härtung frei werdendes Lösungsmittel abfangen und verdampfbar machen und/oder miteinpolymerisieren. Dazu eignen sich nur ganz spezielle Reaktivverdünner aus der Verbindungsklasse der Ketone und/oder der Acrylate, also Verbindungen, die die Struktureinheit $H_2C=C(\mathbf{R})-C(\mathbf{R})=O$ umfassen. **R** kann dabei gleich oder ungleich und ein beliebiger einwertiger organischer Rest sein, beispielsweise eine Aryl- oder eine Alkyl-gruppe oder eine Heteroaryl- oder eine Hetereroalkylaryl-gruppe.

Als "durch Verdampfen entfernbar" wird vorliegend bezeichnet, wenn ein Verfahren zur Extraktion zur teilweisen oder vollständigen Abtrennung von unerwünschten Lösungsmitteln und/oder Reaktions-Nebenprodukten einer flüssigen Reaktionsmischung, die auch eine Dispersion von Feststoffen, beispielsweise in Form von Füllstoff-Partikel, umfassen kann, führt. Ein Verfahren zur Extraktion ist z.B. die klassische Rotationsverdampfung, gegebenenfalls unter Unterdruck und Erwärmung. Neben diesem, auch als "Abrotieren", bezeichneten Verfahren können auch chemische und/oder physikalische Sorptionsverfahren verwendet werden, um den Lösungsmittelgehalt zu reduzieren.

Allgemeine Erkenntnis der Erfindung ist es, dass eine Entfernung eines unerwünschten Lösungsmittels

und/oder Nebenproduktes - wie z.B. eines Alkohols, also beispielsweise Butanol und/oder Methanol - aus einem flüssigen Reaktionsgemisch möglich ist, ohne dass Nachteile, wie Viskositätserhöhung und/oder Verschlechterung der Lagerstabilität, auftreten, wenn das Lösungsmittel durch ein geeignetes anderes Material ersetzt wird. Dieser Ersatz ist insbesondere mischbar mit dem vorliegenden Materialsystem und/oder hat chemisch die Möglichkeit, mit dem vorliegenden Material eine chemische Reaktion einzugehen, welche einen Einbau ins chemische Netzwerk des herzustellenden Formkörpers zur Folge hat.

Dabei wurde gefunden, dass sich dünnflüssige - also viskose bis hochviskose - Reaktivverdünner als Ersatz eignen. Sie wirken vor der Polymerisation als Lösungsmittel und können nach erfolgter Vernetzung nicht mehr aus dem Festkörper entweichen. Reaktivverdünner sind zwar bei der Herstellung von Harzen und polymeren Vergussmassen bereits Stand der Technil, allerdings ist eine Anwendung im Bereich der Silicat-Chemie, insbesondere in einem Sol-Gel-Verfahren, bisher unbekannt.

Der erfindungsgemäße Einsatz eines Reaktivverdünners, bevorzugt eines langkettigen Reaktivverdünners, ermöglicht neben einer deutlichen Reduktion des Schrumpfens und dadurch bessere Maßhaltigkeit, z.B. von etwa 10Vol% auf unter 5Vol% auch die Einflussnahme auf die elastischen und rheologischen Eigenschaften der hybriden Materialzusammensetzung. So können die immer noch geringfügig sich ausbildenden Spannungszustände bei der Verfestigung besser im Formkörper abgefedert und verteilt werden, thermische Schockzustände ohne die Ausbildung von Rissen ablaufen und/oder vor allem auch höhere Füllgrade mit wärmeleitfähigkeitssteigernden Partikeln im Vergleich zu nicht mit Reaktivverdünner - oder nur mit kurzkettigen Reaktivverdünner - gemischten Formulierungen, bewirkt werden. Höhere Füllgrade mit wärmeleitfähigen Füllstoffen führen insgesamt zu höhere Wärmeleitfähigkeiten. Da sich mehrere Reaktivverdünner mit unterschiedlichen Kettenlängen für die Anwendung in der beschriebenen hybriden Materialzusammensetzung eignen, können Viskosität und Elastizität nicht nur über die Menge des Reaktivverdünners, sondern zusätzlich über den verwendeten Typ eingestellt werden. Die Verwendung von Mischungen der Reaktivverdünner ist ebenfalls möglich.

Die Zugabe des Reaktivverdünners und die Entfernung der organischen Reaktionsprodukte mittels Abrotierens erfolgt bevorzugt, nachdem im letzten Syntheseschritt das Wasser zur Hydrolyse zugegeben wird.

Als "erstes Material" wird vorliegend eine Materialzusammensetzung aus zumindest zwei Komponenten bezeichnet, wobei die eine Komponente eine organofunktionelle Silan-Verbindung ist oder zumindest hauptsächlich umfasst, wobei sie insbesondere bevorzugt als Ausgangsmolekül sowohl Alkoxide wie auch organofunktionelle Reste hat.

Die organofunktionelle Silan-Verbindung hat eine Summenformel $(R')_{1+x}$ - Si - $(OCR_{2/3})_{3-x}$, wobei x für 0,1,2,3 stehen kann, mit

R' = Kohlenwasserstoff und Derivate eines Kohlenwasserstoffs, also Alkyl, Aryl, $-(-CH_2)_y-NH_2$, $-(-CH_2)_y-PH_2$, und

R = Kohlenwasserstoff und Derivate eines Kohlenwasserstoffs, also Alkyl, Aryl, $-(-CH_2)_y-NH_2$, $-(-CH_2)_y-PH_2$, sowie Heteroatome wie Sauerstoff "-O", Stickstoff "-N", Schwefel "-S", Phosphor "-P" mit entsprechenden organischen Resten.

Nach einer vorteilhaften Ausführungsform werden bifunktionelle Silane, also Silane der oben beschriebenen Summenformel mit x = 1, bevorzugt. Dies insbesondere deshalb, weil gefunden wurde, dass eine Einbringung von - beispielsweise - Dialkoxysilanen ins Netzwerk die Flexibilität des anorganischen Netzwerkes erhöht. Grund ist, dass diese Silane nur zwei reaktionsfähige Funktionalitäten besitzen, während die anderen organofunktionellen Silane i.d.R. vier bzw. drei Funktionalitäten besitzen. Hierdurch wird der Vernetzungsgrad des Gesamtsystems künstlich verringert und damit die Flexibilität erhöht. Zusätzlich wurde gefunden, dass durch das Einbringen von organischen Reaktivverdünnern die mechanischen Eigenschaften bezüglich Schrumpf und Rissbildung eines daraus durch Härtung hergestellten Formkörpers angepasst wird.

Zu bedenken ist jedoch, dass die Zugabe der organischen Komponenten nicht in beliebigen Mengen erfolgt, da sonst die thermische Leitfähigkeit abnimmt.

Die organischen Reste bleiben bei der Materialsynthese vollständig erhalten und reagieren erst bei der Verarbeitung. Die Alkoxidgruppen können in Anwesenheit von Wasser unter Abspaltung von Alkohol, insbesondere verschiedenen Alkoholen, wie Methanol, Ethanol, Propanol etc. zu Silanolgruppen (-OH) reagieren. Diese Gruppen wiederum bilden während einer unerwünschten Alterung des Materials, jedoch insbesondere bei der thermischen Nachvernetzung unter Wasserabspaltung die "Glaskomponente" oder auch Siloxan-Komponente "Si-O-Si".

Das Molgewicht dieser organofunktionellen Silan-Verbindungen liegt in der Regel im Bereich von 100g/mol bis 400g/mol, insbesondere von 150g/mol bis 300g/mol, ganz besonders von 200g/mol bis 250g/mol.

Die zweite Komponente der hier in Rede stehenden Materialzusammensetzung, die als "erstes Material" bezeichnet ist, ist eine keramikbildende Komponente, eine zumindest ein Silizium-, Aluminium-, Zirkonium- und/oder Titan-Element umfassende, insbesondere als Komplex vorliegende, Verbindung, die zumindest einen alkoxidischen Liganden

umfasst. Diese Komponente enthält grundsätzlich keine oder nur geringe Anteile an organofunktionellen Gruppen und hat bevorzugt nur alkoxidische Liganden.

Durch eine Kondensationsreaktion, beispielsweise im Sol-Gel-Verfahren, werden erste und zweite Komponente miteinander zur Reaktion gebracht, wobei das "erste Material" entsteht, das eine oxidische Verbrückung zwischen zwei Zentralatomen zeigt, z.B. zwischen einem der folgenden Atome: Silizium-, Aluminium-, Zirkonium- und/oder Titan- und/oder auch mehreren untereinander in beliebigen Kombinationen und Mischungen.

Dieses "erste Material" ist ein "organofunktionelles Silan", das mit zumindest einer "keramik-bildenden alkoxidischen Komponente" zumindest teilweise unter Kondensation abreagiert hat. Dieses "erste Material" wird im Folgenden auch als "anreagiertes Silangemisch" bezeichnet.

Bevorzugt liegen in dem so gebildeten ersten Material die organofunktionelle Silanverbindung und die keramikbildende Komponente im Verhältnis im Bereich von 99mol% zu 1mol% bis zu 30mol% zu 70mol% vor, wobei der Anteil an organofunktionellen Silanverbindung mol-mäßig im ersten Material bevorzugt überwiegt.

Für die "Keramikbildende Komponente" des ersten Materials sind Verbindungen wie "Wasserglas" geeignet. Es ist bekannt, das diese mit geeigneten organischen Liganden, wie Acrylat-, Alkyl-Acrylat-, Epoxid-, Styrol- und/oder Anhydrid-Liganden unter Normalbedingungen stabile Verbindungen darstellen können. Dabei können in der keramikbildenden Komponente beliebige Kombinationen aus Zirkonium-, Silizium-, Titan- und/oder Aluminium-Sauerstoff-, und/oder Phosphor-Bindungen mit organischen Liganden vorliegen. Die Liganden können verbrückende oder nichtverbrückende Liganden umfassen.

Dabei handelt es sich um Verbindungen, die beispielsweise Silicium-, Zirkonium- und/oder Aluminium-Sauerstoffbindungen wie -Si-O-Si-, -Al-O-Al-, -Si-O-Al-, -Zr-O-Zr-, -Si-O-Zr-, - Zr-O-Al-O-Si-, -Si-O-Al-O-Zr-, sowie weitere beliebige Kombinationen davon umfassen.

Als "Ligand" wird dabei ein Atom oder ein Molekül bezeichnet, das über eine so genannte "dative" Bindung an ein Metallatom koordiniert. Die dative Bindung geht dabei in der Regel über ein freies Elektronenpaar in der Valenzschale zumindest eines Atoms des Liganden an das zentrale Metallatom.

Als "Wasserglas" wird beispielsweise eine Verbindung wie

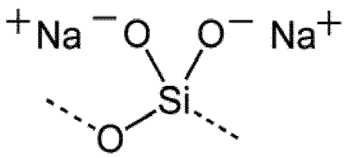

bezeichnet.

Bei der Herstellung des "ersten Materials" wird zunächst auf die Zugabe des Reaktivverdünners verzichtet, weil Reaktivverdünner auf Acrylat-Basis, wie sie bevorzugt hier eingesetzt werden, bei der Vermischung mit organofunktionellem Silan, ziemlich schnell abreagieren. So findet eine Ausbildung eines Acrylat-Netzwerkes zeitlich vor der Ausbildung des Hybridpolymer-Netzwerkes, das, das erste Material ist, statt. Insbesondere die Kondensationsreaktion der organofunktionellen Silane ist langsamer als die Acrylat-Netzwerkbildung. So würde, wenn der Reaktivverdünner gleich mit den organofunktionellen Silanen vermischt würde, ein Acrylat-Netzwerk entstehen, das den restlichen Reaktionspartnern in der nachfolgenden Reaktion weniger Spielraum für eine vorteilhafte Anordnung lässt. Dies kann dazu führen, dass Funktionalitäten im Werkstoff lokal nicht abgesättigt werden und an anderen Orten zu hohe Vernetzungsgrade entstehen. Der Werkstoff wird somit auf molekularer Ebenen ungleichmäßig und verliert an Eigenschaften. Dies kann eine verringerte Festigkeit und hohe Sprödigkeit bedeuten, ebenso wie verringerte thermische Eigenschaften, wenn hierdurch Leitpfade im Werkstoff unterbrochen werden.

Im Folgenden wird die Erfindung noch anhand von einem Ausführungsbeispiel näher erläutert:
Es wurde ein Mol Aluminium-sec-butoxid (ASB) vorgelegt. Dieses wurde mittels eines Eisbades auf ca. 10°C gekühlt. Zunächst wurde zur Vermeidung einer Fällungsreaktion von ASB durch Bildung eines Chelatkomplexes mit Ethylacetoacetat (EAA) im molaren Verhältnis 1:1 zum ASB geschützt.

Da die Komplexbildung exotherm ist, wurde die Temperatur bei der Zugabe überwacht und sollte 13°C nicht überschreiten. Nach einer halben Stunde Rühren erfolgte die Zugabe von jeweils 2 mol der Silane 3-Trimethoxysilylmethylmethacrylate (MAMTMS) und 3-Glycidyloxyprpyltrimethoxysilane (GPTMS), welches tropfenweise innerhalb von 5 Minuten zugegeben wurde. Eine Stunde nach Zugabe der Silane erfolgte die kontrollierte Hydrolysereaktion durch Zutropfen von 15 mol Wasser. Nach zwölf Stunden Rühren ist die Reaktion des Hybridmaterials beendet und die Weiterverarbeitung mit Reaktivverdünner und Abrotieren wird vorgenommen.

Bei der Hydrolysereaktion entstehen somit für oben genannten Ansatz pro Mol Silicium-Precursoren und Aluminium-Precursoren jeweils drei Mol Methanol und drei Mol 2-Butanol. Bezogen auf die möglichen Kondensationsprodukte der eingesetzten Silane wird mit untenstehender Formel daraus die benötigte Menge an Reaktivverdünner berechnet. So wird beispielsweise ein Massenanteil von 20 w% auf die spätere Gesamtmasse des entstehenden Hybridmaterials vor dem Abrotieren hinzugegeben.

$$m\,(\text{Reaktivverd.}) = \frac{\text{w\% (Reaktivverd. im Gesamtsystem)} \cdot m_{\text{Theoretisch}}\,(\text{Hybridmat nach Abrotieren})}{\text{w\% (Hybridmat. im Gesamtsystem)}}$$

Im oben genannten Ansatz entstehen somit für **100g** Ausgangsedukte

**ca. 24,6g Methanol und ca. 14,2g Butanol = Σ38,8g**

38,8 g an Alkohol, der in den Formkörper nicht einvernetzen kann, also im Endeffekt unter Umständen zu Schrumpfungen führen wird.

Es verbleiben => **61,2g** an theoretischer Masse der hybriden Materialzusammensetzung ohne Reaktivverdünner.

Die Summe von **38,8 g** ist die theoretische Menge an Lösungsmittel die theoretisch entfernt, z. B. abrotiert, werden sollte.

**20 Gew**% Reaktivverdünner werden beispielsweise dann zugegeben, die entsprechen einer Menge von **15,3g.**

Die hybride Materialzusammensetzung, zumindest die keramik-bildende Substanz, das Silan und den Reaktivverdünner, z.B. Urethandimethacrylate (UDMA), Ethylenglykol-dimethacrylat (EGDMA), 1,6 Hexadioldiacrylat (HDODA); Bisphenol-A-ethoxydiacrylat (BAEDA), Trimethylpropantriacrylat (TMPTA), etc. umfassend, wird zur Entfernung des Alkohols in einen 500ml Rundkolben eingewogen. Der Rundkolben wird nun an einen Rotationsverdampfer angeschlossen und im Wasserbad auf <30°C eingestellt, wobei der Druck langsam auf p kleiner 100 mbar gesenkt wird. Dieser Unterdruck wird ein paar Minuten gehalten, wobei der Kolben mit einer Umdrehung von ca. 200 Rmin-1 rotiert und danach wieder mit Luft geflutet wird.

Es konnte ein Material auf Basis einer Silanmischung erhalten werden, das sowohl [$R_2$Si-O-Si-] als auch [$R_2$Si-O-Al-O-]- Einheiten aufweist.

Hier wird die Reaktion beispielsweise als Sol-Gel-Reaktion, die eine Kondensation umfasst, ausgeführt.

Diese beispielhafte Reaktion nach einer Ausführungsform der Erfindung zur Bildung eines der möglichen "anreagierten Silangemische" respektive des ersten Materials, das in einem späteren Verfahrensschritt mit dem zweiten Material, also einem flüssigen Epoxid-, Imid- und/oder Polybenzoxazol-Harz nicht gezeigt) und dem Reaktivverdünner gemischt wird, wird im Folgenden anhand eines Reaktionsschemas dargestellt:

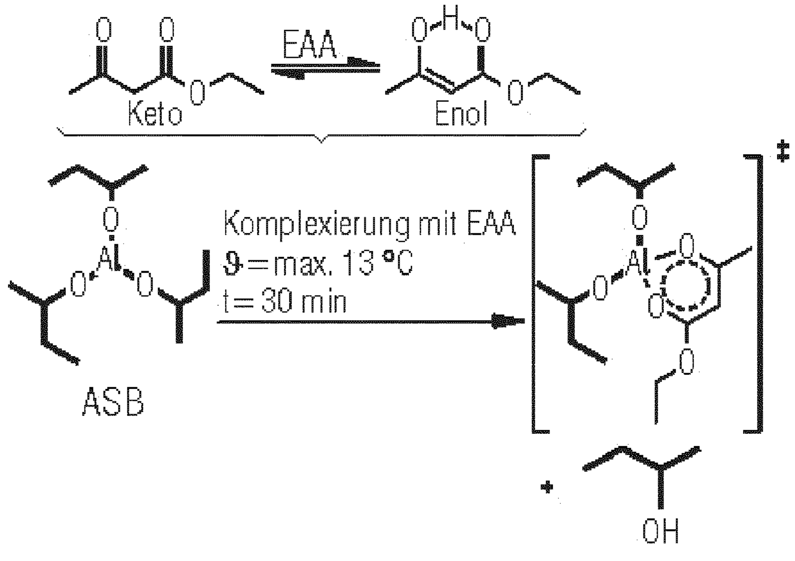

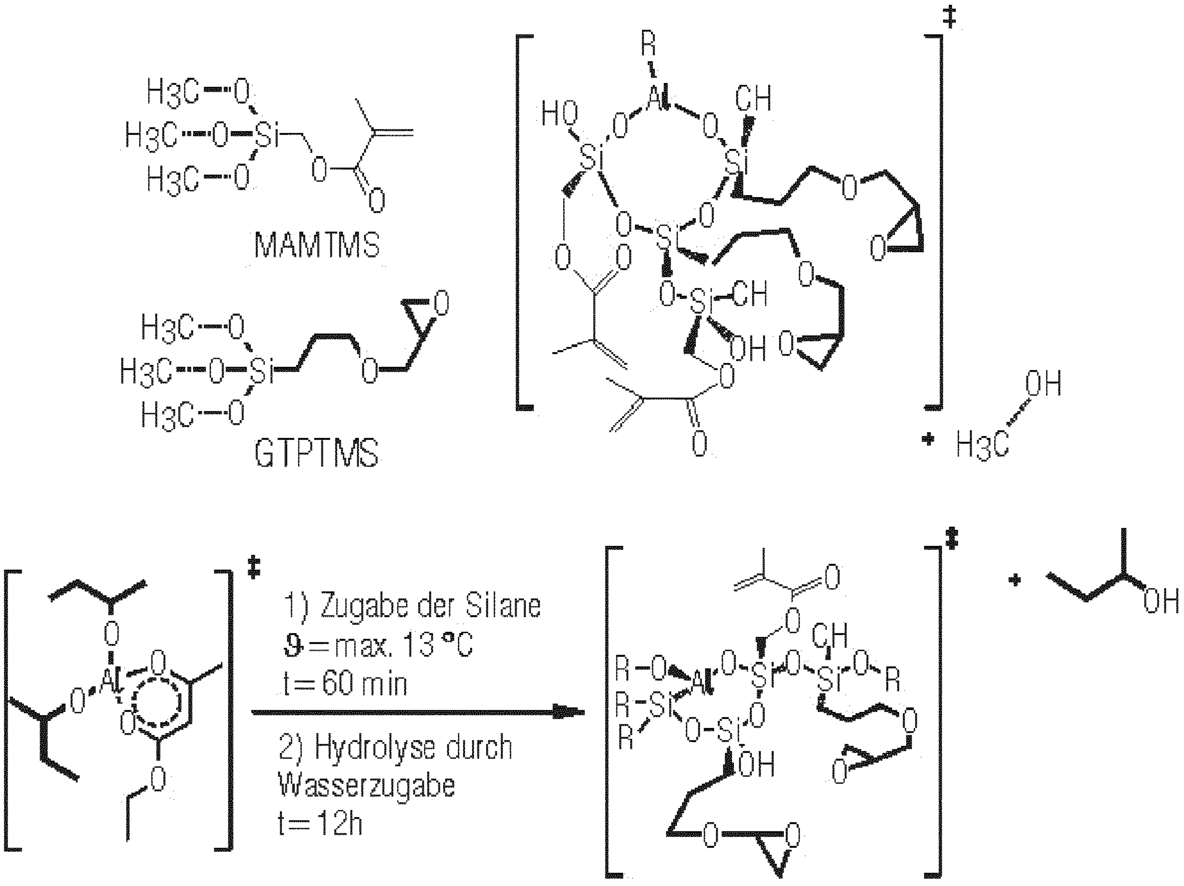


Mögliche Ausschnitte des Nanokomposits

Auf der Produktseite zeigt das Reaktionsschema lediglich Ausschnitte der erhaltenen Produkte an, die möglicherweise aber nicht zwangsläufig in der Form entstehen. Wie dem Fachmann bewusst ist, können hier verschiedene Produkte herauskommen, die mal in dieser und mal in einer anderen Verknüpfung vorliegen, wobei immer sowohl [$R_2$Si-O-Si-] als auch [$R_2$Si-O-Al-O-J- Einheiten nachweisbar sind.

Im Reaktionsschema ist besonders gut die Entstehung der Lösungsmittel Methanol und 2-Butanol zu erkennen, wobei das Lösungsmittel durch Zugabe eines Reaktivverdünners wie eines Acrylats, eines Ketons, eines Phenons und/oder eines Phosphinoxids abgefangen und in den Formkörper mit-ein-polymerisiert wird.

Beispielsweise können folgende Verbindungen gemäß bevorzugter Ausführungsformen im zweiten Material als Reaktivverdünner einzeln oder in beliebiger Mischung eingesetzt werden: Trimethylpropantriacrylat (TMPTA), Urethandimethylacrylat (UDMA), Ethylenglykoldimethacrylat (EGDMA), 1,6 Hexadioldiacrylat (HDODA); Bisphenol-A-Ethoxydiacrylat (BAEDA), Polyethylenglykol-Dimethylacrylat (EDMA) und/oder Nona-ethylenglykoldimetacrylat (NEGDMA) in beliebigen Kombinationen und/oder Mischungen, eingesetzt.

Die Zugabe an Reaktivverdünner beträgt in den meisten Fällen bevorzugt 20 Gew% bezogen auf das theoretische Gewicht an eingesetzten anreagiertem Silan, also "ersten Material" ohne Lösemittel. Der Gehalt von 20 Gew% kann sich z.B. auf die Reaktivverdünner UDMA und EDMA von jeweils 10Gew% aufteilen.

Das Vorliegen zumindest eines Reaktivverdünners in der Formulierung ermöglicht neben einer deutlichen Reduktion des Schrumpfens durch Vernetzung und dadurch bessere Maßhaltigkeit, von etwa 10% auf unter 5% auch die Einflussnahme auf die elastischen und rheologischen Eigenschaften des durch thermische Härtung erhältlichen vernetzten Polymers. So können die immer noch geringfügig sich ausbildenden Spannungszustände bei der Verfestigung besser im Werkstoff abgefedert und verteilt werden, thermische Schockzustände ohne die Ausbildung von Rissen ablaufen und insgesamt höhere Füllgrade mit wärmeleitfähigkeitssteigernden Partikeln - das bewirkt insgesamt höhere Wärmeleitfähigkeiten eines daraus hergestellten Formkörpers - realisiert werden. Da sich mehrere Reaktivverdünner mit unterschiedlichen Kettenlängen für die Anwendung im beschriebenen Materialsystem eignen, können Viskosität und Elastizität nicht nur über die Menge des Reaktivverdünners, sondern zusätzlich über den verwendeten Typ eingestellt werden. Die Verwendung von Mischungen der Reaktivverdünner ist ebenfalls möglich.

Nach einer vorteilhaften Ausführungsform werden demnach insbesondere langkettige Vertreter der Reaktivverdünner bevorzugt und/oder in den Mischungen überwiegend eingesetzt, weil herausgefunden wurde, dass die langkettigen Reaktivverdünner, wie z.B. Acrylate, die elastischen Eigenschaften des gesamten Werkstoffs verbessern, ohne dabei die Festigkeit zu verringern.

Als "langkettig" wird dabei ein Acrylat mit einer unverzweigten Kohlenstoff-Kette von zumindest 5 Kohlenstoff-Atomen, vorzugsweise von zumindest 8 Kohlenstoff-Atomen und ganz bevorzugt von zumindest 12 Kohlenstoff-Atomen, bezeichnet.

Diese mit - insbesondere wärmeleitfähigen - Partikeln füllbaren "ersten Materialien" lassen sich mit dem "zweiten Material" also allen Kunstharzen wie Epoxide, Imide und/oder PBO - Polybenzoxazole einerseits und dem Reaktivverdünner andererseits, lagerstabil mischen, so dass sie erst bei geeigneter Zugabe von Härter und/oder Initiator und entsprechender Temperaturerhöhung irreversibel zum Formkörper abreagieren.

Als "zweites Material", das ein thermisch zu einem Formkörper aushärtbares Harz ist, eignen sich alle gängigen Kunstharze, vorzugsweise solche, die thermisch beständig sind und in der Formulierung - unter Normalbedingungen - flüssig und/oder verflüssigbar, insbesondere auch mit klebriger Oberfläche - daher die Verwendung als Kleber - , vorliegen. Das zweite Material umfasst dieses Harz oder diese Harzmischung und den Reaktivverdünner. Vor einer Verarbeitung wird diesen meist noch eine Härterkomponente beigemischt. Die Formulierung härtet dann unter Temperaturerhöhung und meist in kurzer Zeit zu einem sehr festen, unschmelzbaren Kunststoff, beispielsweise zu einem dreidimensional vernetzten Duromer, aus.

"Normalbedingungen" sind in Fachkreisen auch als "Standard Temperatur and Pressure" kurz "STP" geläufig.

Als "flüssig" wird dabei ein weiter Bereich an Viskosität bezeichnet, in dem die Formulierung mit Füllstoff verarbeitbar ist. Fließfähig reicht in vielen Fällen auch aus. Abhängig von der Verwendung kann die Formulierung dünnflüssiger oder dickflüssiger vorliegen, je nachdem z.B. in welche Kapillaren die Formulierung eingebracht werden soll.

Grundsätzlich soll die Fließfähigkeit der Reaktionspartner aufeinander abgestellt sein. Beispielsweise kann die Dickflüssigkeit des ersten Materials durch Dünnflüssigkeit des zweiten Materials ausgeglichen werden.

In der Formulierung liegt die anreagierte Silanverbindung, also das erste Material mit dem "zweiten Material" dem flüssigen Harz und dem Reaktivverdünner im Verhältnis - in Gewichtsprozent - von 1 Gew% zu 99 Gew% bis 99 Gew% zu 1 Gew% vor.

Bei den vielen verschiedenen Anwendungen können hier auch unterschiedliche Mengenverhältnisse von erstem zu zweitem Material vorliegen. Nach einer bevorzugten Ausführungsform überwiegt die erste Komponente.

Beispielsweise vorzugsweise im Bereich von 60Gew% bis 85 Gew% erstes Material zu 15Gew% bis 40Gew% zweites Material, beispielsweise auch im Verhältnis 50 Gew% zu 50 Gew% vor. Bevorzugt liegen zumindest 10 Gew% "zweites Material" in der ungefüllten Formulierung.

Zur Herstellung von insbesondere wärmeleitfähigen Formkörper aus einer Materialzusammensetzung nach der Erfindung wird der flüssigen Mischung beispielsweise noch Füllstoff, insbesondere wärmeleitfähiger metallischer und/oder keramischer Füllstoff, zugegeben. Beispielsweise wird als metallischer Füllstoff Kupfer und/oder Aluminium zugegeben. Als keramischer Füllstoffe kommen alle Arten von Metalloxiden, Metallnitriden, wie beispielsweise AlN, Aluminiumnitrid, $Al_2O_3$ Aluminium-Trioxid - "Korund" -, Magnesiumoxid, Zinkoxid und/oder Zinnoxid, in verschiedenen Modifikationen wie Perowskit, Titanat, etc., dotiert oder undotiert vorliegend, in Frage.

Als Füllstoffe, insbesondere auch als wärmeleitfähige Füllstoffe werden beispielsweise metallische und/oder keramische beschichtete und/oder unbeschichtete Partikel eingesetzt. Die Partikel können als Mischungen mehrerer Fraktionen vorliegen, die sich im Material, der Form, der Größe etc. unterscheiden können. Füllstoffe können dem Material unterschiedliche Eigenschaften, wie Wärmeleitfähigkeit, elektrische Leitfähigkeit, Farbe, metallischen Glanz, usw. verleihen.

Füllstoffe und/oder sonstige Additive können in der hybriden Materialzusammensetzung nach der Erfindung in einer Menge von 0 bis 85 Gew%, insbesondere von 0 bis 80Gew% und bevorzugt von 0 bis 70% enthalten sein. Füllgrade im Bereich von 70 bis 90 Gew% sind mit den vorliegend beschriebenen Formulierungen gut realisierbar, insbesondere wenn so genannte "multimodale" Füllstoffmischungen, wie sie in Gießharzen bereits eingesetzt werden, verwendet werden. Dabei werden kleinere Füllstoffpartikel mit größeren Füllstoffpartikeln vermischt, so dass die kleineren Füllstoffpartikel oft als Kugellager für die größeren Füllstoffpartikel dienen und ein hoher Füllgrad mit gro-ßen Füllstoffpartikeln einer fließfähigen und guten Verarbeitbarkeit der so gefüllten Harz- und/oder Kleber-Formulierung nicht im Wege stehen.

Als "multimodal" wird dabei bezeichnet, wenn nicht nur eine Füllstofffraktion, die in Form, Dichte, Material, und Korngröße mehr oder weniger einheitlich vorliegt, sondern verschiedene Fraktionen, die sich hinsichtlich ihres Materials, ihrer Form, ihrer Dichte und vor allem auch hinsichtlich ihrer Größe unterscheiden, vorliegen. Dabei können kleinere Füllstoffe dann die Lücken, die größere Füllstoffpartikel lassen ausfüllen und außerdem bei der Fließfähigkeit der Füllstoffpartikel als Kugellager wirken und somit hochgefüllten Formulierungen eine für die Verarbeitbarkeit ausreichende Fließfähigkeit verleihen.

Dabei ist es wichtig, dass in dem ausgehärteten Duromer möglichst wenig unvernetztes, also nicht Teil des das dreidimensionale Netzwerk bildendes, Material vorliegt. Dies zum einen deshalb, weil es ausdünstet und dann im Formkörper Hohlräume hinterlässt, die zu einer Schwächung der mechanischen Festigkeit führen und zum anderen, weil die physikalischen und chemischen Eigenschaften des Formkörpers an der Stelle nicht gleich denen im dreidimensionalen Netzwerk sein können und damit die Brauchbarkeit des Formkörpers im Ganzen, sei es zur Wärmeabfuhr, als Kühlkörper, zur Verkapselung und/oder als Klebstoff, beeinträchtigen.

Dabei kommt es, je nach Zusammensetzung der Formulierung zu Schrumpfungen und/oder Spannungszuständen, weil das in der ursprünglichen Flüssigkeit vorhandene Lösungsmittel bei der Verfestigung zumindest teilweise eingeschlossen wird und durch Diffusionsprozesse den Feststoff langsam wieder verlässt. Ein dabei auftretender Kapillardruck kann unter ungünstigen Bedingungen sogar zur Ausbildung von Rissen und/oder Aufplatzungen führen und wirkt sich daher nachteilig auf ein so hergestelltes Werkstück, wie beispielsweise eine Kühlstruktur, aus. Eine einfache Reduktion und/oder Anpassung des Lösemittelanteils, wie er beispielsweise bei Lacken und Farben möglich ist, kann beim vorliegenden Material nicht erfolgen.

So wird bei der Synthese des Materials ohnehin kein organisches Lösungsmittel zugesetzt - es bildet sich als Abspaltprodukt bei der Reaktion der Monomere in zunehmendem Maße mit fortschreitendem Reaktionsstadium. Zusätzlich zu den organischen Lösungsmitteln, wie z.B. Methanol, Ethanol, Propanol, Butanol, liegt im Material eine geringe Menge an Wasser vor, welche zum Start der Reaktion zugegeben wird und nicht vollständig verbraucht wird. Beide Komponenten, also sowohl organisches Lösungsmittel als auch Wasser, verursachen bei der Durchhärtung des Materials die beschriebenen Schrumpf- und/oder Rissbildungserscheinungen.

Mit einer Formulierung gemäß der vorliegenden Erfindung lassen sich Formkörper mit den folgenden physikalischen Eigenschaften herstellen:

Wärmeleitfähigkeit in [W/mK] Im Bereich von 10 bis 40;
Zugscherfestigkeit in [N/mm$^2$] im Bereich von 10 bis 30;
Viskosität in [Pascal] im Bereich von 150 bis 800;
Verarbeitungstemperatur in [°C] 200;
Topfzeit in [Stunde] im Bereich von 2 bis 24; Lagerstabilität in [Monat] 4;
Volumenwiderstand in [Q*mm] im Bereich von 1 x $10^{15}$ bis elektrisch leitend;
Durchschlagfestigkeit in [kV/mm] im Bereich von größer 20 bis ebenfalls elektrisch leitend.

Hier wird erstmals eine Formulierung bereitgestellt, mit der sich hohe Füllgrade bei langer Topfzeit und guter Wärmeleitfähigkeit vereint, so dass für Vergießen, Extrusion, Spritzguss eine Formulierung mit höchsten Füllgraden und gleichzeitig guter Verarbeitbarkeit erhältlich ist.

## Patentansprüche

1. Formulierung für ein Harz und/oder einen Kleber, zumindest ein erstes Material aus zumindest einer organofunktionellen Silan-Komponente mit einer Keramik-bildenden alkoxidischen Komponente und zumindest ein zweites, flüssig vorliegendes, Material, thermisch zu einem Formkörper härtbares Harz sowie Reaktivverdünner umfassend.

2. Formulierung nach Anspruch 1, bei der im ersten Material die organofunktionelle Silan-basierte Komponente gegenüber der Keramik-bildenden alkoxidischen Komponente überwiegt.

3. Formulierung nach einem der Ansprüche 1 oder 2, wobei die keramik-bildende zweite Komponente im ersten Material ein Oxid eines Siliziums, Titans, Aluminiums, Bors und/oder Zirkoniums umfasst.

4. Formulierung nach einem der vorhergehenden Ansprüche, wobei das Molgewicht der organofunktionellen Silanverbindung im Bereich von 100 g/mol bis 400g/mol liegt.

5. Formulierung nach einem der vorhergehenden Ansprüche, wobei zumindest ein Reaktivverdünner ausgewählt ist aus der Gruppe folgender Verbindungen: Acrylate, Ketone, Phenone und/oder Phosphinoxide.

6. Formulierung nach einem der vorhergehenden Ansprüche, wobei zumindest ein Reaktivverdünner in Form eines langkettigen Acrylats, das mit einem Grundgerüst an unverzweigt vorliegenden Kohlenstoff-Atomen einer Kettenlänge von grö-ßer/gleich 5 vorliegt.

7. Formulierung nach einem der vorhergehenden Ansprüche, wobei zumindest ein organofunktionelles Silan enthalten

ist, das bifunktionell ist.

**8.** Formulierung nach einem der vorstehenden Ansprüche, wobei das flüssig vorliegende Harz und/oder der Reaktivverdünner und das erste Material im Verhältnis - in Gewichtsprozent - von 1 Gew% zu 99 Gew% bis 50 Gew% zu 50 Gew% vorliegen.

**9.** Formulierung nach einem der vorhergehenden Ansprüche, bei der im zweiten, flüssig vorliegenden Material ein Epoxidharz, ein Imidharz und/oder ein Polybenzoxazol-Harz allein oder in beliebigen Kombinationen und/oder Mischungen vorliegt.

**10.** Formulierung nach einem der vorhergehenden Ansprüche, bei der als Reaktivverdünner ein Acrylat, ausgewählt aus der Gruppe folgender Acrylate Trimethylpropantriacrylat (TMPTA), Urethandimethylacrylat (UDMA), Ethylenglykoldimethacrylat (EGDMA), 1,6 Hexadioldiacrylat (HDODA), Bisphenol-A-ethoxydiacryla (BAEDA), Polyethylenglykol-Dimethylacrylat (EDMA) und/oder Nona-ethylenglykol-dimethacrylat (NEGDMA) alle vorgenannten Acrylat-Verbindungen in beliebigen Kombinationen und/oder Mischungen vorliegend, umfasst

**11.** Formulierung nach einem der vorhergehenden Ansprüche, die Füllstoffe umfasst.

**12.** Formulierung nach Anspruch 11, wobei die Füllstoffe in verschiedenen Fraktionen, insbesondere multimodal vorliegen.

**13.** Formulierung nach einem der vorhergehenden Ansprüche, die wärmeleitfähige Füllstoffe umfasst.

**14.** Formkörper, erhältlich durch thermische Härtung einer Formulierung nach einem der Ansprüche 1 bis 13.

**15.** Verwendung einer Formulierung nach einem der Ansprüche 1 bis 13 als wärmeleitfähiges Harz und/oder Kleber zur Wärmeableitung in einem elektrischen oder elektronischen Bauelement.

Europäisches Patentamt
European Patent Office
Office européen des brevets

# EUROPÄISCHER RECHERCHENBERICHT

Nummer der Anmeldung
EP 22 21 2236

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2020/305269 A1 (EDER FLORIAN [DE] ET AL) 24. September 2020 (2020-09-24)<br>* Ansprüche 1,5 *<br>* Absätze [0026] - [0028] *<br>----- | 1-15 | INV.<br>C08L83/06<br>C08L83/10<br>C08L83/14 |
| A | CN 115 246 939 A (UNIV SHANGHAI) 28. Oktober 2022 (2022-10-28)<br>* Beispiel 1 *<br>----- | 1-15 | |
| A | DE 10 2021 201697 A1 (SIEMENS AG [DE]) 25. August 2022 (2022-08-25)<br>* Anspruch 1 *<br>* Absatz [0038] *<br>----- | 1-15 | |
| A,D | EP 4 059 712 A1 (SIEMENS AG [DE]) 21. September 2022 (2022-09-21)<br>* Anspruch 1 *<br>* Absatz [0047] *<br>----- | 1-15 | |

RECHERCHIERTE SACHGEBIETE (IPC)

C08L
C08G

Der vorliegende Recherchenbericht wurde für alle Patentansprüche erstellt

1

| Recherchenort | Abschlußdatum der Recherche | Prüfer |
|---|---|---|
| Den Haag | 22. Mai 2023 | Queste, Sébastien |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 22 21 2236

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-05-2023

| Im Recherchenbericht angeführtes Patentdokument | Datum der Veröffentlichung | Mitglied(er) der Patentfamilie | Datum der Veröffentlichung |
|---|---|---|---|
| US 2020305269 A1 | 24-09-2020 | CN 109155295 A | 04-01-2019 |
| | | DE 102016205178 A1 | 05-10-2017 |
| | | EP 3420586 A1 | 02-01-2019 |
| | | US 2020305269 A1 | 24-09-2020 |
| | | WO 2017167502 A1 | 05-10-2017 |
| CN 115246939 A | 28-10-2022 | KEINE | |
| DE 102021201697 A1 | 25-08-2022 | KEINE | |
| EP 4059712 A1 | 21-09-2022 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 4059712 A